# EUROPÄISCHE PATENTSCHRIFT

(11) **EP 0 891 903 B1**
(45) Veröffentlichungstag und Bekanntmachung des Hinweises auf die Patenterteilung: **11.02.2009**
(21) Anmeldenummer: 98110907.7
(22) Anmeldetag: 15.06.1998
(51) Int. Cl.: B60T 8/17, B60K 31/00

(54) **Automatische Notbremsfunktion**
Automatic emergency brake function
Fonction automatique de frein de secours

(30) Priorität: 04.09.1997 DE 19738611; 17.07.1997 DE 19730676
(43) Veröffentlichungstag der Anmeldung: 20.01.1999
(73) Patentinhaber: Volkswagen Aktiengesellschaft, 38436 Wolfsburg (DE)
(72) Erfinder: Mai, Rudolf, 38442 Wolfsburg (DE); Lissel, Ernst, Dipl.-Ing., 38442 Wolfsburg (DE); Bergholz, Ralf, Dr., 38108 Braunschweig (DE); van Meel, Franciscus, 85113 Böhmfeld (DE); Sinnhuber, Ruprecht, D-38518 Gifhorn (DE)

(56) Entgegenhaltungen:
- US-A- 4 987 357
- US-A- 5 230 400
- US-A- 5 332 057

## Beschreibung

Die Erfindung bezieht sich auf ein Verfahren und eine Vorrichtung für eine Notbremsfunktion eines Fahrzeuges gemäß den Oberbegriffen der Ansprüche 1, 3, 4 und 12.

Zur Erhöhung der Sicherheit für Fahrzeug und Lenker im heutigen Straßenverkehr wird neben dem Einsatz von fahrzeugübergreifenden Verkehrsleitsystemen zunehmend versucht, den Fahrer bei Routinetätigkeiten sowie in außergewöhnlichen Fahrsituationen mit Hilfe von Systemen zu unterstützen, die automatisch in die Steuerung des Fahrzeuges oder einzelner Fahrzeugkomponenten eingreifen.

Ein erster Schritt hierzu war der Einsatz von Antiblockiersystemen (ABS) und , Antriebsschlupfregelungen (ASR) zur Erhöhung der Stabilität des Fahrzeuges in längsdynamisch kritischen Situationen, d.h. bei Brems- und Beschleunigungsvorgängen.

Des weiteren finden sog. Fahrdynamikregelungen (FDR) bzw. Fahrstabilitätsregelungen (FSR) Einsatz zur Erhöhung der Fahrstabilität in querdynamisch kritischen Situationen, also insbesondere in Fahrsituationen, die durch einen Lenkradeinschlag des Fahrers hervorgerufen und beeinflußt werden. FDR werten Sensorinformationen aus, die an einzelnen Komponenten oder dem Gesamtfahrzeug durch geeignete Sensoren abgenommen werden und korrelieren diese anhand spezieller Auswertealgorithmen. Hierdurch wird es möglich, querdynamisch kritische Situationen zu erkennen und durch gezielte Beeinflussung einzelner Parameter der Fahrzeugdynamik, z.B. Lenkradwinkel, Fahrgeschwindigkeiten und -beschleunigungen, das Fahrzeug positiv in Bezug auf die querdynamisch kritische Situation zu beeinflussen. Hierbei spielt insbesondere auch die Reibungssituation zwischen Fahrzeugreifen und Fahrbahn eine wichtige Rolle, da hiervon die Kraftübertragung zwischen Fahrzeug und Fahrbahn aufgrund von Regeleingriffen direkt abhängt. FDR arbeiten aber sozusagen blind in Bezug auf die Umgebung des Fahrzeuges, die sich beispielsweise aus der Straßenumgebung und aufgrund anderer in der Nähe befindlicher, sich bewegender Fahrzeuge ergibt. Somit können FDR allein nicht dazu herangezogen werden, fahrphysikalisch sinnvolle Eingriffe in die Fahrzeugbewegung daraufhin zu untersuchen, ob mit den Eingriffen auch sinnvolle Fahrbewegungen in Bezug auf in der Nähe befindliche, sich bewegende Fahrzeuge oder die Fahrbahnumgebung hervorgerufen werden.

Es sind andererseits Systeme vorgeschlagen worden, die durch gezieltes Beschleunigen bzw. Verzögern und/ oder durch Ausweichmanöver eine Kollision des Fahrzeuges mit einem Hindernis verhindern sollen. Derartige, als Collision Avoidance Systems (CAS) bezeichnete Systeme sollen das Fahrzeug aus mittels Sensoren erkannten Kollisionssituationen dadurch herausführen, daß durch eine vom Fahrer entkoppelte Lenkung und damit unabhängig vom Fahrer auszuführende Lenkbewegungen sowie ebenfalls fahrerunabhängig gesteuerte Beschleunigungen bzw. Verzögerungen des Fahrzeuges eine Kollision vermieden wird. In der EP 0 582 236 wird ein neuronales Netzwerk vorgeschlagen, das mittels Auswertung von laufend per CCD-Kamera aufgenommener Umgebungsbilder die Umgebung auf mögliche Kollisionen auswertet und anhand zusätzlicher Signale des Fahrzustandes des Fahrzeuges eine Beeinflussung von Fahrzeuggeschwindigkeit und Lenkbewegung vornimmt. Eine andere Lösung schlägt die DE 43 02 527 vor, bei der durch Segmentierung des zu überwachenden Straßenbereiches unter Einbeziehung von Zustandsinformationen des Fahrzeuges Regeln abgeleitet werden, wie durch Brems- und Lenkoperationen einem erkannten Hindernis ausgewichen werden kann. Hauptproblem dieser vorgeschlagenen Systeme ist die Komplexität von GAS, die nur mittels einer stark ausgebauten Sensorik im Fahrzeug sowie Regelungsstrategien sicher funktionieren können, die z.B. auch das Wissen über freie Fluchtwege in einer vorgegebenen Fahrsituation benötigen. Da zu generierende Ausweich- und Beschleunigungsstrategien nur mit einem Höchstmaß an plausibler Absicherung der Reaktion ohne ein zusätzliches Sicherheitsrisiko für Fahrer und Fahrzeug ausführbar sind, übersteigt die Komplexität von Aufwand und Zuverlässigkeit die Grenzen, die von der Automobiltechnik derzeit geleistet werden können.

Aufgrund der Komplexität von GAS und den Schwierigkeiten bei der Realisierung wurde eine Reihe von Einzelsystemen vorgeschlagen, mit denen einzelne Funktionen von GAS realisiert werden können. Aus einer Reihe von Veröffentlichungen (z.B. DE 42 18 484 A1, DE 43 28 304 A1) sind Abstandserfassungssysteme (ADR = Automatische Distanz Regelung) bekannt, mit denen der Abstand eines Fahrzeuges von anderen Fahrzeugen und/oder festen Gegenständen in Fahrtrichtung erfaßt und hinsichtlich eines notwendigen Bremsverhaltens beeinflußt werden kann. Aus der EP 0 545 437 A2 ist ein Verfahren zur Vermeidung von Kollisionen von Kraftfahrzeugen bekannt, mit dem in Fahrtrichtung beabstandete Fahrzeuge erfaßbar sind und mittels Warnmeldungen der Fahrer bei unzulässigen Annäherungen gewarnt wird. Der Fahrer hat dann aufgrund des noch nicht erreichten Abstandsminimums Gelegenheit, selbst entsprechende Bremsvorgänge einzuleiten. Bei Unterschreiten eines minimal zulässigen Abstandes wird dann das Fahrzeug automatisch so abgebremst, daß sich der geforderte Abstand wieder einstellt. In der GB 2 262 829 wird insbesondere das Bewegungsverhalten der beteiligten Fahrzeuge in die Verzögerungsstrategie einbezogen, um nicht unnötige oder sogar gefährliche Abbremsungen herbeizuführen. Nachteilig an derartigen Systemen ist es, daß die Warnung vor einer Kollision bzw. die Korrektur der Bewegung des Fahrzeuges ständig und weitgehend ohne Beeinflussungsmöglichkeit durch den Fahrer erfolgt. Aufgrund der notwendigen Absicherung der Regelalgorithmen erfolgt eine Aktion der Systeme schon sehr frühzeitig, um die Reaktion, z.B. das Abbremsen des Fahrzeuges, nicht zu abrupt ausführen zu müssen. Hierdurch spricht das System auch schon in Situationen an, die von einem mehr oder minder geübten Fahrer ohne Probleme noch selbst gemeistert worden wären. Der Fahrer empfindet die ständigen und aus seiner Sicht nur in einer geringen Anzahl von Fällen tatsächlich notwendigen Eingriffe als Bevormundung, wodurch die Akzeptanz derartiger Systeme nur gering sein kann.

Die US 5,332,057 A betrifft ein Schutzsystem für ein Fahrzeug zum Vermeiden eines Anstoßens an ein Hindernis. Dazu weist das Schutzsystem Sensoren zum Erfassen einer Umgebung eines Fahrzeugs auf. In Abhängigkeit von der jeweils erfassten Umgebung des Fahrzeugs kann eine Bremse oder ein Lenkrad des Fahrzeugs so gesteuert werden, dass ein Kontakt mit einem erfassten Hindernis verhindert wird. Das Schutzsystem kann dabei auch einen Sensor zum Erfassen eines Reibungskoeffizienten einer befahrenen Fahrbahn aufweisen.

Aufgabe der vorliegenden Erfindung ist es daher, ein Verfahren und eine Vorrichtung der gattungsgemäßen Art so weiterzubilden, die dem Fahrer ein Höchstmaß an Entscheidungssouveränität beim Ausweichen gegenüber Hindernissen ermöglichen, ohne im Falle einer tatsächlichen Kollisionssituation auf die Vorteile eines den Fahrer unterstützenden Systems zur Kollisionsbegrenzung zu verzichten.

Die Aufgabe wird durch die Gegenstände der Ansprüche 1, 3, 4 und 12 gelöst. Die Unteransprüche beschreiben bevorzugte Weiterbildungen des erfindungsgemäßen Verfahrens und der erfindungsgemäßen Vorrichtung.

In einer ersten Ausführungsform der vorliegenden Erfindung ist das erfindungsgemäße Verfahren dadurch gekennzeichnet, dass bei Umgehen des Hindernisses durch Lenkbewegungen der Zeitpunkt, ab dem fahrphysikalisch eine Kollision nicht mehr.zu umgehen ist, dann vorliegt, wenn bei dem gemessenen Bewegungszustand des Fahrzeuges der erforderliche Ausweichradius zum Umgehen des Hindernisses kleiner als ein sich aus dem Bewegungszustand der Fahrzeuges errechnender Ausweichradius ist.

Hierbei wird vorteilhafterweise die Berechnung des Ausweichradius' in jeder Fahrsituation anhand des Kamm'schen Kreises vorgenommen, einer dem Fachmann vertrauten und daher hier nicht weiter erläuterten Berechnungsmethode.

In einer zweiten Ausführungsform der vorliegenden Erfindung ist das erfindungsgemäße Verfahren dadurch gekennzeichnet, dass in einer Speichereinrichtung die von einer Erfassungseinrichtung bereitgestellten Umgebungsdaten und/oder die von innerhalb des Fahrzeuges angeordneten Sensoren erzeugten Sensorsignale und/oder ein von einer Kameraeinrichtung zur visuellen Erfassung des Verkehrsgeschehens erzeugtes Bildsignal abgespeichert werden, wobei in der Speichereinrichtung zu den von der Erfassungseinrichtung bereitgestellten Umgebungsdaten und/oder den von den Sensoren gelieferten Sensorsignalen und/oder dem von der Kameraeinrichtung gelieferten Bildsignal ein Zeit-Code gespeichert wird, wobei in der Speichereinrichtung nur die Daten, die in einem gewissen Zeitraum vor Auslösung der automatischen Notbremsfunktion anfallen, gespeichert werden.

Das erfindungsgemäße Verfahren ist in einer weiteren Ausführungsform der vorliegenden Erfindung dadurch gekennzeichnet, dass in einer Speichereinrichtung die von einer Erfassungseinrichtung bereitgestellten Umgebungsdaten und/oder die von innerhalb des Fahrzeuges angeordneten Sensoren erzeugten Sensorsignale und/oder ein von einer Kameraeinrichtung zur visuellen Erfassung des Verkehrsgeschehens erzeugtes Bildsignal abgespeichert werden, wobei in der Speichereinrichtung zu den von der Erfassungseinrichtung bereitgestellten Umgebungsdaten und/oder den von den Sensoren gelieferten Sensorsignalen und/oder dem von der Kameraeinrichtung gelieferten Bildsignal ein Zeit-Code gespeichert wird, wobei die von der Erfassungseinrichtung bereitgestellten Umgebungsdaten und/oder die Sensorsignale der Sensoren und/oder das Bildsignal der Kameraeinrichtung synchronisiert werden und zur Synchronisation der Daten der Zeit-Code verwendet wird.

Diese Maßnahmen besitzten den Vorteil, daß die Einflußgrößen, die zur Auslösung der automatischen Notbremsfunktion geführt haben, einer nachträglichen Auswertung zugänglich sind. Dies ist insbesondere aus Gründen der Produkthaftung des Herstellers des Kraftfahrzeuges wünschenswert.

Es hat sich bei der Auswertung von Unfallstatistiken gezeigt, daß ein großer Teil aller Unfälle mit Kollisionen zwischen Fahrzeugen und/ oder der Straßenumgebung durch menschliches Versagen, aufgrund sog. Fahraufgabenfehler und durch den physiologischen Fahrerzustand bedingt wird. In diesen Fällen ist der Fahrer nur begrenzt in der Lage, durch gezielte Aktionen die Kollision zu verhindern. Darüber hinaus ist festzustellen, daß bei einer ebenfalls sehr hohen Prozentzahl von Kollisionsunfällen nur leicht oder sogar gar nicht gebremst wurde. Gleichzeitig ist bei einer ähnlich hohen Anzahl von Kollisionsunfällen festzustellen, daß die Unfallfolgen durch Verringerung der Fahrzeuggeschwindigkeit im Zeitpunkt des Aufpralls signifikant zu verringern wäre.

Das erfindungsgemäße Verfahren geht daher von dem Grundgedanken aus, daß aufgrund der Komplexität möglicher Kollisionssituationen der Fahrer des Fahrzeuges so lange wie möglich die Gelegenheit haben soll, durch von ihm selbst vorzunehmende Handlungen wie Brems- und/oder Lenkoperationen die Kollision zu vermeiden. Erst wenn sich aufgrund der fahrphysikalischen Gegebenheiten, die sich aus dem Fahrzustand des Fahrzeuges sowie der Kollisionskonstellation ergibt, eine Kollision eindeutig nicht mehr zu vermeiden ist, wird durch eine automatisch ausgelöste und vorzugsweise möglichst starke Verzögerung des Fahrzeuges dieses vor der Kollision so abgebremst, daß die Unfallfolgen für Fahrer und Fahrzeug dadurch minimiert werden.

Hierzu erfaßt bei dem erfindungsgemäßen Verfahren ein an dem Fahrzeug vorgesehenes Erfassungssystem laufend in oder nahe der Bewegungsrichtung des Fahrzeuges befindliche Hindernisse und meldet diese an eine Auswerteeinheit weiter. Darüber hinaus sind.an dem Fahrzeug oder einzelnen seiner Baugruppen Sensoren für charakteristische Meßgrößen des Fahrzeugzustandes bzw. des Bewegungsverhaltens des Fahrzeuges angeordnet, die ebenfalls laufend diese Meßgrößen an die Auswerteeinheit weitermelden. Die Auswerteeinheit ermittelt aus den weitergemeldeten Daten über die Hindernisse und den Meßgrößen des Fahrzeugzustandes laufend Sollwerte zur Beeinflussung der Fahrzeugbewegung. Diese Sollwerte werden jedoch nicht einfach wieder direkt für die Fahrzeugbeeinflussung benutzt, sondern daraufhin untersucht, ob auch ohne diese Sollwerte eine denkbare Kollision mit dem oder den Hindernissen noch verhindert werden kann. Ist dies der Fall, so bleiben diese Sollwerte für die Fahrzeugbeeinflussung unberücksichtigt und es bleibt dem Fahrer des Fahrzeuges die volle Entscheidungsfreiheit, wie er selbst dem Hindernis ausweichen will. Erst bei Erreichen einer durch die Auswerteeinheit festgestellten, fahrphysikalisch durch keine denkbare und sinnvolle Fahrzeugbeeinflussung mittels Lenken und/oder Bremsen mehr zu umgehenden Kollision des Fahrzeuges mit einem Hindernis wird eine automatische Notbremsung durch schnelle Verzögerung des Fahrzeuges ausgelöst. Hierdurch wird erst in Kollisionssituationen, in denen auch ein noch so geübter Fahrer durch selbstbestimmte Fahraktionen der Kollision nicht mehr ausweichen kann, dafür gesorgt, daß die Unfallfolgen durch die damit erreichbare geringere Geschwindigkeit im Kollisionszeitpunkt automatisch und ohne eventuell kontraproduktive Aktionen des Fahrers verringert werden.

In einer Weiterbildung der Erfindung wird die fahrphysikalische Grenze für ein mögliches Ausweichen vor dem Hindernis und damit die Auslösung der Notbremsfunktion für vom Fahrer vornehmbare separate Brems- oder Lenkbewegungen sowie Kombinationen hiervon bestimmt. Der Fahrer kann unterschiedlich auf eine sich abzeichnende Kollisionssituation dadurch reagieren, daß er entweder nur bremst oder nur lenkt, um dem Hindernis auszuweichen. Darüber hinaus kann er, wie dies auch in Sicherheitstrainings unterrichtet wird, durch verschiedene sinnvolle Kombinationen von Lenk- und Bremsaktionen dem Hindernis ausweichen, die zu ganz unterschiedlichem Fahrzeugverhalten und damit Fahrresultaten beim Ausweichen führen können. Vorteilhafterweise wird der Auslösezeitpunkt für die erfindungsgemäße automatische Notbremsfunktion durch Auswertung von einigen oder allen derartigen Ausweichstrategien bestimmt, um eine Notbremsung erst dann hervorzurufen, wenn keine der denkbaren Ausweichstrategien mehr zum Erfolg führen kann.

In einer Weiterbildung des erfindungsgemäßen Verfahrens wird zur Vermeidung einer Kollision mit dem Hindernis allein durch Bremsen der Auslösezeitpunkt für die Notbremsung, ab dem fahrphysikalisch eine Kollision nicht mehr zu umgehen ist, dadurch bestimmt, daß im Auslösezeitpunkt der notwendige Anhalteweg gerade größer ist als der Abstand zwischen Hindernis und Fahrzeug im wesentlichen in Bewegungsrichtung. Dieser Zeitpunkt läßt sich anhand von dem Fachmann vertrauten physikalen Größen zur Bestimmung des Anhalteweges berechnen und muß hier nicht weiter erläutert werden. Dieser Anhalteweg muß dann allein mit der von der Erfassungseinrichtung festgestellten Entfernung zum Hindernis vergleichen werden.

### Besonders vorteilhaft ist es, in die Berechnung des Fahrzeugzustandes aufgrund der am

Fahrzeug angeordneten Sensoren und der von ihnen ermittelten Werte auch den laufend ermittelten Kraftbeiwert bzgl. der Kraftübertragung zwischen Reifen des Fahrzeuges und der Fahrbahn einzubeziehen, wodurch auch eine Änderung der Reibungsverhältnisse während der Bewegung des Fahrzeuges berücksichtigt wird und zur Verbesserung des Notbremsverhaltens bzw. des Auslösezeitpunktes beitragen kann. Auch kann hierdurch durch gezielte Beeinflussung der Verzögerungswerte eine maximal mögliche Geschwindigkeitsreduzierung in Abhängigkeit vom Straßenzustand erfolgen.

Zur Erzielung einer besonders großen Geschwindigkeitsreduzierung aufgrund der Notfallsituation sollte die automatische Bremsung mit maximalem Bremsdruck erfolgen, da die verbleibende Restgeschwindigkeit im Aufprallzeitpunkt direkt ein Maß für die Aufprallenergie und damit für die Belastung der Insassen darstellt. In einer Weiterbildung erfolgt die Verzögerung bis zum Stillstand des Fahrzeuges.

Es ist von besonderem Vorteil, wenn die Verzögerung nach dem Ansprechen der Notbremsfunktion unabhängig von Handlungen des Fahrers durch Lenkbewegungen und/oder Bremsen erfolgt, da eine Kollision aufgrund der strengen Ansprechbedingungen der automatischen Notbremsung sowieso nicht mehr zu vermeiden ist und eventuelle Aktionen des Fahrers einen Teil der Wirkung der Notbremse wieder zunichte machen könnten. Eine Vollbremsung mit maximaler Bremsverzögerung, ggf. unter Einschaltung von Funktionen eines Antiblockiersystems und/oder einer Fahrdynamikregelung, wird im Normalfall die deutlichste Verringerung der Unfallfolgen bewirken.

In einer Weiterbildung wird nach Erkennen eines kritischen Hindernisses und vor Auslösen der Notbremsfunktion das Erfassungssystem im wesentlichen das erkannte Kollisionshindernis erfassen, um auch schon geringere Änderungen der Kollisionssituation sicher und möglichst zeitnah zu erkennen und in die Entscheidung zum Auslösen der Notfallbremse einzubeziehen. Darüberhinaus können die hinsichtlich ihrer Kollisionswahrscheinlichkeit nicht so kritischen eventuellen weiteren Hindernisse dann bezüglich der Auslösung der Notbremsfunktion vernachlässigt werden, wenn eine Kollision mit dem kritischsten Hindernis schon fast nicht mehr umgangen werden kann. Die weitere Beobachtung der anderen möglichen Hindernisse benötigt hierbei nur unnötig Kapazität der Erfassungseinrichtung und der Auswerteeinrichtung.

Das Verfahren zur Notbremsung wird besonders vorteilhaft bei niedrigen bis mittleren Geschwindigkeiten des Fahrzeuges, vorzugsweise bei Geschwindigkeiten unterhalb von 120 km/h, eingesetzt, da anhand von Auswertungen von Unfalldaten bekannt ist, daß oberhalb von ca. 100-120 km/h nur noch wenige Kollisionsunfälle passieren und dabei die Unfallfolgen so schwer sind, daß ein optimales Bremsen keine wesentliche Minderung der Folgen bewirken würde.

Die erfindungsgemäße Vorrichtung zur Durchführung des Verfahrens zur automatischen Notbremsung weist als Voraussetzung ein unabhängig von der Bedienung durch den Fahrer frei ansteuerbares Bremssystem auf. Dieses Bremssystem wird nach Auslösen der Notbremsung von den Aktionen des Fahrers völlig abgekoppelt, um den höchstmöglichen Geschwindigkeitsabbau automatisch erzielen zu können. Hierzu weist das Bremssystem neben hohen erzielbaren Bremswirkungen eine geringe Ansprechverzögerung auf, so daß eine Betätigung der Bremse unmittelbar eine Verzögerung bewirkt. Besonders vorteilhaft ist es, wenn die Vorrichtung mit einem Antiblockiersystem und/oder einer elektronischem Blockierverhinderung und/oder einer Fahrdynamikregelung kombiniert ist, da dann der Fahrzeugzustand auch während der Bremsung und bei kritischen Straßenverhältnissen besser kontrollierbar bleibt. Da derartige Systeme mittlerweile in viele Fahrzeugen serienmäßig eingebaut sind, kann die Vorrichtung zur automatischen Notfallbremsung vorteilhafterweise auch mit den bekannten Systemen verbunden oder in diese integriert werden.

Die erfindungsgemäße Vorrichtung für die Erfassung des Bewegungszustandes des Fahrzeuges weist zumindest Sensoren für die Erfassung von Lenkwinkel, Fahrzeuggeschwindigkeit und/oder Fahrzeuggierwinkel auf, um die aktuelle Fahrzeugsituation und deren Veränderungen erfassen zu können. Ggf. können auch die in Antiblockiersystemen oder Fahrdynamikregelungen enthaltenen Sensoren gleichzeitig hierzu genutzt werden.

Von besonderem Vorteil ist es, wenn die Vorrichtung Sensoren und Auswerteeinrichtungen zur Bestimmung des Kraftbeiwertes zwischen Straße und Reifen des Fahrzeuges aufweist, mit denen der jeweilige Straßenzustand erfaßt werden kann. Hieraus können dann Werte für die maximal mögliche Verzögerung gewonnen werden, die beispielsweise bei nasser oder glatter Straße auch während des Bremsvorganges ständigen Veränderungen unterliegen können.

Als Sensoren zur Erfassung der Umgebung werden vorzugsweise Radar- oder Lasersensoren eingesetzt, die dem Fachmann in ihrer Anwendung vertraut sind. Es sind aber auch alle anderen Arten von Sensoren denkbar, die eine ausreichende Vorausschau über den Bewegungsbereich des Fahrzeuges erlauben und für den Einsatz unter rauhen Fahrzeugbedingungen geeignet sind.

Eine weitere vorteilhafte Weiterbildung der Erfindung sieht vor, daß eine - vorzugsweise im Bereich des Innenspiegels des Kraftfahrzeugs angeordnete - Kameraeinrichtung vorgesehen ist, durch die das Unfallgeschehen visuell erfaßbar und das von der Kameraeinrichtung erzeugte Bildsignal in der Speichereinrichtung abspeicherbar ist. Eine derartige Maßnahme besitzt den Vorteil, daß dadurch das Unfallgeschehen aus der Sicht des Fahrzeuglenkers erfaßbar und nachträglich auswertbar ist.

Eine besonders vorteilhafte Ausbildung des erfindungsgemäßen Verfahrens und der erfindungsgemäßen Vorrichtung zur automatischen Notbremsung zeigt die Zeichnung.

Es zeigen:
- Figur 1: eine potentielle Unfallsituation an einer Kreuzung mit einem stehenden und einem kreuzenden Fahrzeug;
- Figur 2: eine Auffahrsituation auf einem geraden Straßenabschnitt;
- Figur 3: Struktur einer Signalverarbeitung der automatischen Notbremse.

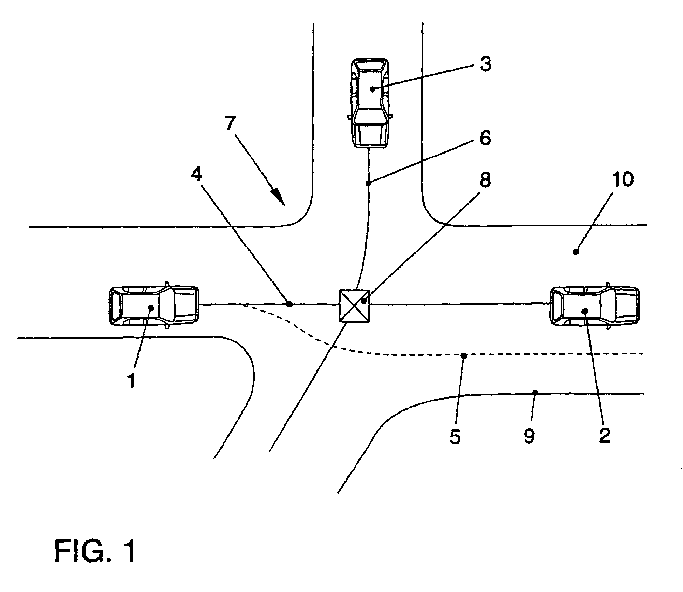

In der Figur 1 ist eine typische potentielle Unfallsituation in einem Kreuzungsbereich dargestellt, bei der ein fahrendes Fahrzeug 1 in die Gefahr einer Kollision mit einem jenseits der Kreuzung 7 stehenden Fahrzeug 2 und einem kreuzenden Fahrzeug 3 kommt. Dem stehenden Fahrzeug 2 kann der Fahrer des Fahrzeuges 1 aufgrund des großen Abstandes noch durch Lenkbewegungen entlang der Ausweichbahn 5 noch ausweichen, ohne daß es zu einer Kollision kommt. Hierzu ist zwischen dem stehenden Fahrzeug 2 und dem Fahrbahnrand 9 noch ausreichend Platz.

Bezüglich des kreuzenden Fahrzeuges 3 kann der Fahrer des Fahrzeuges 1 aber nicht ausweichen, wobei es egal ist, ob er entlang seiner ursprünglichen Fahrtrichtung 4 weiterfährt oder entlang der Ausweichbahn 5 ausweicht. Je nach dem Verhältnis der Geschwindigkeiten von Fahrzeug 1 und Fahrzeug 3 kommt es im Bereich des Kollisionspunktes 8 als ungefährer Schnittpunkt der Bewegungsrichtung 4 des Fahrzeuges 1 bzw. der Bewegungsrichtung 6 des Fahrzeuges 3 im Bereich des Kollisionspunktes 8 zu einer Kollision. In dieser Ausgangssituation ist die automatische Notbremsfunktion von großer Bedeutung, da durch sie der Schaden an den Fahrzeugen und Fahrern minimiert werden kann, wenn z.B. Fahrzeug 1 mit einer derartigen Funktion ausgestattet ist und mit größtmöglicher Verzögerung automatisch abgebremst wird.

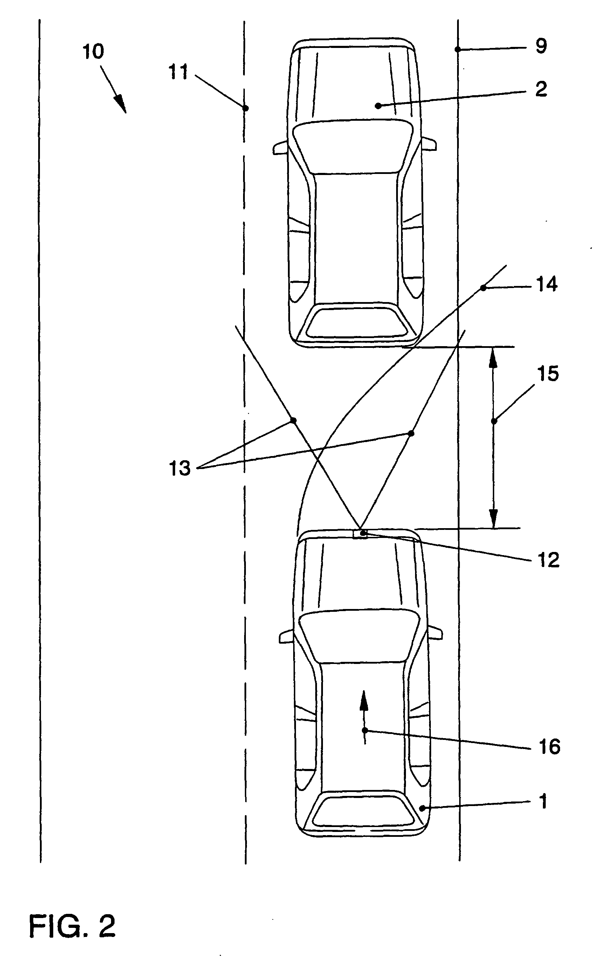

In der Figur 2 ist eine typische Auffahrsituation auf einer geraden Fahrbahn 10 dargestellt, bei der sich ein mit einer Anfangsgeschwindigkeit in Richtung des Pfeiles 16 bewegendes Fahrzeug 1 von hinten einem stehenden Fahrzeug 2 nähert. Im vorderen Bereich des Fahrzeuges 1 ist eine nur schematisch angedeutete Erfassungseinrichtung 12 angeordnet, die in einem durch seine Grenzen angedeuteten Erfassungsbereich 13 die Fahrbahn 10 auf Hindernisse absucht. Das stehende Fahrzeug 2 befindet sich innerhalb des Erfassungsbereiches 13, wobei in der dargestellten Situation das fahrende Fahrzeug 1 sich in einem Abstand 15 hinter dem stehenden Fahrzeug 2 befindet.

Erkennt nun der Fahrer des Fahrzeuges 1 rechtzeitig das Hindernis, so kann er durch Bremsen und/oder Lenken dafür sorgen, daß er sein Fahrzeug 1 entweder hinter dem Fahrzeug 2 zum Stehen bekommt oder entlang einer angedeuteten Ausweichbahn 14 ausweicht. Die in der Figur 2 dargestellte Ausweichbahn 14 soll gerade den Grenzfall einer Ausweichbewegung darstellen, bei der das Fahrzeug 1 gerade noch dem Fahrzeug 2 ausweichen kann. Abhängig von der Geschwindigkeit des Fahrzeuges 1 in Richtung des Pfeiles 16 sowie dem Fahrbahnzustand und weiteren Einflußgrößen betreffend das Fahrzeug 1 wird nun abhängig auch vom Abstand 15 das Fahrzeug 1 noch rechtzeitig bremsen, ausreichend um das Fahrzeug 2 herumgelenkt werden können oder einer Kollision auch mit allen denkbaren Lenk- und Bremsbewegungen nicht mehr ausweichen können. Liegt der letzte Fall vor, so wird es aufgrund der Auswertung der Daten des Erfassungssystems 12 und der nicht weiter angegebenen Sensoren an dem Fahrzeug 1 von der Auswerteeinrichtung 12 erkannt und die automatische Notbremsung eingeleitet.

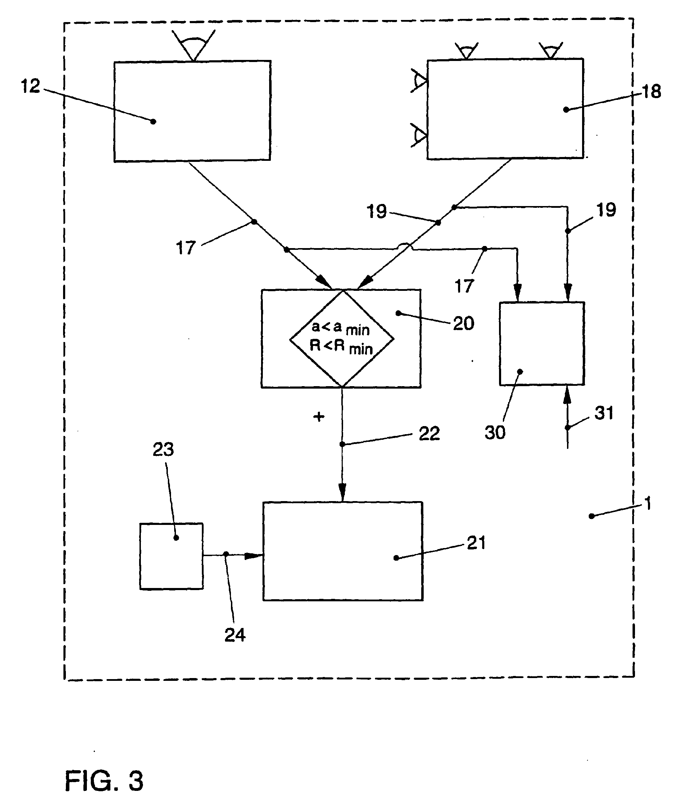

In der Figur 3 ist in einer sehr schematisierten Darstellung der Ablauf der Entscheidung über die Auslösung der automatischen Notbremsfunktion dargestellt, wie sie in einer denkbaren Ausführungsform der Erfindung ablaufen kann. Hierzu werden die von der Erfassungseinrichtung 12 bereitgestellten Umgebungsdaten 17 sowie die Sensorsignale 19 der verschiedenen innerhalb des Fahrzeuges angeordneten Sensoren 18 in der Auswerteeinrichtung 20 zusammengeführt. Diese Daten werden im einfachsten Fall auf die Einhaltung eines ausreichenden Anhalteweges a > amin untersucht, in weiteren, auch alternativen Auswertungsschritten kann beispielsweise der Ausweichradius R überprüft werden. Sind beide Kriterien unterschritten, wird ein Auslösesignal 22 an die Verzögerungseinrichtung 21 abgegeben, das einerseits die von dem Bremspedal 23 des Fahrers kommenden Steuersignal übersteuert und zum anderen die höchste Verzögerung durch maximale Betätigung der Bremse hervorruft. Dieser Zustand bleibt bis zum Stillstand des Fahrzeuges 1 erhalten. Liegt hingegen keine Unterschreitung eines oder mehrerer Grenzwerte vor, so wird kein Auslösesignal 22 abgegeben und der Fahrer kann allein mit von seiner Bremse 23 abgegebenen Steuersignalen 24 und/oder nicht dargestellten Lenkbewegungen dem Hindernis ausweichen und wird dabei in keiner Weise beeinflußt oder gestört.

Vorzugsweise ist vorgesehen, daß die von der Erfassungseinrichtung 12 bereitgestellten Umgebungsdaten 17 und/oder die Sensorsignale 19 der von den verschiedenen innerhalb des Fahrzeugs angeordneten Sensoren 18 in eine Speichereinrichtung 30 abgespeichert werden. Eine derartige Maßnahme besitzt den Vorteil, daß im Falle einer Kollision, die auch durch die automatische Notbremsfunktion nicht mehr verhindert werden konnte, die zu diesem Unfall korrelierten Umgebungsdaten 17 und Sensorsignale 19 für eine nachträgliche Auswertung zur Verfügung stehen. Diese Kenntnis der der automatischen Notbremsung und/oder der Kollision vorausgehenden Umgebungsdaten 17 und Sensorsignale 19 ist nicht nur für eine verkehrsrechtliche Untersuchung des Unfallgeschehens von Vorteil. Vielmehr ist die genaue Kenntnis der Parameter, die zur Auslösung der automatischen Notbremsfunktion geführt haben, auch im Hinblick auf die Produkthaftung des Herstellers des Kraftfahrzeuges und/oder des Herstellers der Vorrichtung zur Notbremsung eines Fahrzeuges von Bedeutung.

Hierbei wird bevorzugt, daß die Speichereinrichtung 30 als Speichereinrichtung ausgeführt ist, die nur die in einem gewissen Zeitintervall vor dem Auslösen der automatischen Notbremsfunktion liegenden Daten speichert, während die weiter zurückliegenden Daten 17, 19 überschrieben werden. Vorzugsweise wird hierbei ein Ringspeicher verwendet.

Die oben beschriebene Speicherung der von der Erfassungseinrichtung 12 bereitgestellten Umgebungsdaten 17 und/oder der Sensorsignale 19 der innerhalb des Fahrzeuges angeordneten Sensoren 18 erlaubt in vorteilhafter Art und Weise eine im wesentlichen vollständige Fassung aller Kriterien, die zu der Auslösung der automatischen Notbremsungsfunktion geführt haben. Diese Vorgangsweise ist aber aufgrund der anfallenden Datenmenge relativ aufwendig.

Deshalb wird vorgeschlagen, daß alternativ zu der vorstehend beschriebenen Speicherung der von der Erfassungseinrichtung 12 bereitgestellten Umgebungsdaten 17 und/oder der Sensorsignale 19 der Sensoren 18 im Sinne einer weniger aufwendigen Erfassung des der Auslösung der automatischen Notbremsfunktion vorangehenden (Unfall)-Geschehens vorgesehen ist, daß durch eine Kameraeinrichtung (nicht gezeigt) die Verkehrssituation in Fahrtrichtung erfaßbar ist und das entsprechende Bildsignal 31 in der Speichereinrichtung 30 abgespeichert wird. Es wird hierbei bevorzugt, daß sich diese in den Figuren nicht gezeigte Kameraeinrichtung im Innenspiegelbereich des Kraftfahrzeuges befindet, so daß das in der Speichereinrichtung 30 aufgezeichnete Bildsignal 31 der Kameraeinrichtung das Unfallgeschehen aus der Sicht des Fahrzeuglenkers repräsentiert.

Es ist auch möglich, das von dieser Kameraeinrichtung gelieferte Bildsignal 31 zusätzlich zu den Umgebungsdaten 17 und/oder der Sensorsignale 19 aufzeichnen, um die von der Erfassungseinrichtung 12 und den Sensoren 18 gelieferten Daten durch eine visuelle Darstellung des Unfallgeschehens zu komplettieren.

Vorzugsweise ist vorgesehen, daß in der Speichereinrichtung 30 zu den von der Erfassungseinrichtung 12 bereitgestellten Umgebungsdaten 17 und/oder den Sensorsignalen 19 der Sensoren 18 und/oder dem Bildsignal 31 der Kameraeinrichtung ein Zeit-Code zugeordnet und abgespeichert wird. Eine derartige Maßnahme besitzt den Vorteil, daß der zeitliche Ablauf des Verkehrs- oder Unfallgeschehens bei einer nachträglichen Auswertung der in der Speichereinrichtung 30 gespeicherten Informationen 17, 19, 31 leicht feststellbar ist.

Desweiteren ist vorzugsweise vorgesehen, daß die Vorrichtung und hierbei insbesondere die Speichereinrichtung 30 eine Synchronisationseinheit aufweist, welche dazu dient, die Umgebungsdaten 17 der Erfassungseinrichtung 12 und/oder die Sensorsignale 19 der Sensoren 18 und/oder das Bildsignal 31 der Kameraeinrichtung zu synchronisieren, um bei einer nachträglichen Auswertung in der Lage zu sein, die von im wesentlich voneinander unabhängigen Quellen (Erfassungseinrichtung 12, Sensoren 18 und Kameraeinrichtung) gelieferten Daten (Umgebungsdaten 17, Sensorsignale 19, Bildsignal 31) hinsichtlich ihrer zeitlichen Abfolge zu korrelieren. Vorzugsweise wird hierzu der bereits oben angesprochene Zeit-Code verwendet.

### BEZUGSZEICHENLISTE

- 1: sich bewegendes Fahrzeug
- 2: stehendes Fahrzeug
- 3: kreuzendes Fahrzeug
- 4: Bewegungsrichtung des sich bewegenden Fahrzeug
- 5: Ausweichbahn
- 6: Bewegungsrichtung des kreuzenden Fahrzeuges
- 7: Kreuzungsbereich
- 8: Kollisionspunkt
- 9: Fahrbahnrand
- 10: Fahrbahn
- 11: Mittelstreifen
- 12: Erfassungseinrichtung
- 13: Erfassungsbereich
- 14: Ausweichradius
- 15: Anhalteweg/ Fahrzeugabstand
- 16: Bewegungsrichtung
- 17: Daten Erfassungseinrichtung
- 18: Sensoren
- 19: Daten Sensoren
- 20: Auswerteeinrichtung
- 21: Verzögerungseinrichtung
- 22: Auslöseimpuls Notbremsung
- 23: Bremse Fahrer
- 24: Steuersignal Bremspedal Fahrer
- 30: Speichereinrichtung
- 31: Bildsignal

## Patentansprüche

1. Verfahren zur Notbremsung eines Fahrzeuges, bei dem ein an dem Fahrzeug vorgesehenes Erfassungssystem (12) laufend in oder nahe der Bewegungsrichtung (16) des Fahrzeuges (1) befindliche Hindernisse (2, 3) erfaßt und an eine Auswerteeinheit (20) weitermeldet, an dem Fahrzeug (1) oder einzelnen seiner Baugruppen angeordnete Sensoren (18) charakteristische Meßgrößen (19) des Fahrzeugzustandes laufend an die Auswerteeinheit (20) weitermelden, die Auswerteeinheit (20) aus den weitergemeldeten Daten (17) über die Hindernisse (2, 3) und den Meßgrößen (19) des Fahrzeugzustandes laufend Sollwerte zur Beeinflussung der Fahrzeugbewegung ermittelt, wobei erst bei Erreichen einer durch die Auswerteeinheit (29) festgestellten, fahrphysikalisch durch keine Fahrzeugbeeinflussung mittels Lenken und/oder Bremsen mehr zu umgehenden Kollision des Fahrzeuges (1) mit einem Hindernis (2, 3) eine automatische Notbremsung durch schnelle Verzögerung des Fahrzeuges (1) ausgelöst wird, und wobei die fahrphysikalische Grenze für ein mögliches Ausweichen vor dem Hindernis (2, 3) und damit die Auslösung der Notbremsfunktion für vom Fahrer vornehmbare Brems- und/ oder Lenkbewegungen bestimmt wird,
**dadurch gekennzeichnet, daß**
bei Umgehen des Hindernisses (2, 3) durch Lenkbewegungen der Zeitpunkt, ab dem fahrphysikalisch eine Kollision nicht mehr zu umgehen ist, dann vorliegt, wenn bei dem gemessenen Bewegungszustand des Fahrzeuges (1) der erforderliche Ausweichradius (14) zum Umgehen des Hindernisses (2, 3) kleiner als ein sich aus dem Bewegungszustand der Fahrzeuges (1) errechnender Ausweichradius ist.

2. Verfahren nach Anspruch 1, **dadurch gekennzeichnet, daß** die Berechnung des Ausweichradius' (14) in jeder Fahrsituation anhand des Kamm'schen Kreises erfolgt.

3. Verfahren zur Notbremsung eines Fahrzeuges, bei dem ein an dem Fahrzeug vorgesehenes Erfassungssystem (12) laufend in oder nahe der Bewegungsrichtung (16) des Fahrzeuges (1) befindliche Hindernisse (2. 3) erfaßt und an eine Auswerteeinheit (20) weitermeldet, an dem Fahrzeug (1) oder einzelnen seiner Baugruppen angeordnete Sensoren (18) charakteristische Meßgrößen (19) des Fahrzeugzustandes laufend an die Auswerteeinheit (20) weitermelden, die Auswerteeinheit (20) aus den weitergemeldeten Daten (17) über die Hindernisse (2, 3) und den Meßgrößen (19) des Fahrzeugzustandes laufend Sollwerte zur Beeinflussung der Fahrzeugbewegung ermittelt, wobei erst bei Erreichen einer durch die Auswerteeinheit (29) festgestellten, fahrphysikalisch durch keine Fahrzeugbeeinflussung mittels Lenken und/oder Bremsen mehr zu umgehenden Kollision des Fahrzeuges (1) mit einem Hindernis (2, 3) eine automatische Notbremsung durch schnelle Verzögerung des Fahrzeuges (1) ausgelöst wird,
**dadurch gekennzeichnet, dass**
in einer Speichereinrichtung (30) die von einer Erfassungseinrichtung (12) bereitgestellten Umgebungsdaten (17) und/oder die von innerhalb des Fahrzeuges angeordneten Sensoren (18) erzeugten Sensorsignale (19) und/oder ein von einer Kameraeinrichtung zur visuellen Erfassung des Verkehrsgeschehens erzeugtes Bildsignal (31) abgespeichert werden, wobei
in der Speichereinrichtung (30) zu den von der Erfassungseinrichtung (12) bereitgestellten Umgebungsdaten (17) und/oder den von den Sensoren (18) gelieferten Sensorsignalen (19) und/oder dem von der Kameraeinrichtung gelieferten Bildsignal (31) ein Zeit-Code gespeichert wird, wobei
in der Speichereinrichtung (30) nur die Daten (18, 19, 31), die in einem gewissen Zeitraum vor Auslösung der automatischen Notbremsfunktion anfallen, gespeichert werden.

4. Verfahren zur Notbremsung eines Fahrzeuges, bei dem ein an dem Fahrzeug vorgesehenes Erfassungssystem (12) laufend in oder nahe der Bewegungsrichtung (16) des Fahrzeuges (1) befindliche Hindernisse (2, 3) erfaßt und an eine Auswerteeinheit (20) weitermeldet, an dem Fahrzeug (1) oder einzelnen seiner Baugruppen angeordnete Sensoren (18) charakteristische Meßgrößen (19) des Fahrzeugzustandes laufend an die Auswerteeinheit (20) weitermelden, die Auswerteeinheit (20) aus den weitergemeldeten Daten (17) über die Hindernisse (2, 3) und den Meßgrößen (19) des Fahrzeugzustandes laufend Sollwerte zur Beeinflussung der Fahrzeugbewegung ermittelt, wobei erst bei Erreichen einer durch die Auswerteeinheit (29) festgestellten, fahrphysikalisch durch keine Fahrzeugbeeinflussung mittels Lenken und/oder Bremsen mehr zu umgehenden Kollision des Fahrzeuges (1) mit einem Hindernis (2, 3) eine automatische Notbremsung durch schnelle Verzögerung des Fahrzeuges (1) ausgelöst wird,
**dadurch gekennzeichnet, dass**
in einer Speichereinrichtung (30) die von einer Erfassungseinrichtung (12) bereitgestellten Umgebungsdaten (17) und/oder die von innerhalb des Fahrzeuges angeordneten Sensoren (18) erzeugten Sensorsignale (19) und/oder ein von einer Kameraeinrichtung zur, visuellen Erfassung des Verkehrsgeschehens erzeugtes Bildsignal (31) abgespeichert werden, wobei
in der Speichereinrichtung (30) zu den von der Erfassungseinrichtung (12) bereitgestellten Umgebungsdaten (17) und/oder den von den Sensoren (18) gelieferten Sensorsignalen (19) und/oder dem von der Kameraeinrichtung gelieferten Bildsignal (31) ein Zeit-Code gespeichert wird, wobei die von der Erfassungseinrichtung (12) bereitgestellten Umgebungsdaten (17) und/oder die Sensorsignale (19) der Sensoren (18) und/oder das Bildsignal (31) der Kameraeinrichtung synchronisiert werden und zur Synchronisation der Daten (18, 19, 31) der Zeit-Code verwendet wird.

5. Verfahren nach einem der Ansprüche 1 bis 4, **dadurch gekennzeichnet, daß** zur Vermeidung einer Kollision mit dem Hindernis (2, 3) durch Bremsen der Zeitpunkt, ab dem fahrphysikalisch eine Kollision nicht mehr zu umgehen ist, dann vorliegt, wenn der notwendige Anhalteweg (15) größer ist als der Abstand des Fahrzeuges (1) im wesentlichen in Bewegungsrichtung (16) von dem Hindernis (2, 3).

6. Verfahren nach einem der vorstehenden Ansprüche, **dadurch gekennzeichnet, daß** in die Berechnung des Fahrzeugzustandes aufgrund der Meßgrößen (19) der am Fahrzeug angeordneten Sensoren (18) auch der laufend ermittelte Kraftbeiwert bzgl. der Kraftübertragung zwischen Reifen des Fahrzeuges (1) und der Fahrbahn (10) eingeht.

7. Verfahren nach einem der vorstehenden Ansprüche, **dadurch gekennzeichnet, daß** die Verzögerung des Fahrzeuges (1) durch Bremsen erfolgt.

8. Verfahren nach Anspruch 7, **dadurch gekennzeichnet, daß** die Bremsung mit maximalem Bremsdruck erfolgt.

9. Verfahren nach einem der Ansprüche 7 oder 8, **dadurch gekennzeichnet, daß** die Verzögerung bis zum Stillstand des Fahrzeuges (1) erfolgt.

10. Verfahren nach einem der vorstehenden Ansprüche, **dadurch gekennzeichnet, daß** die Verzögerung nach dem Ansprechen der Notbremsfunktion unabhängig von Handlungen des Fahrers durch Lenkbewegungen und/ oder Bremsen erfolgt.

11. Verfahren nach einem der vorstehenden Ansprüche, **dadurch gekennzeichnet, daß** nach Erkennen eines kritischen Hindernisses (2, 3) und vor Auslösen der Notbremsfunktion das Erfassungssystem (12) im wesentlichen das Kollisionshindernis (2, 3) erfaßt.

12. Vorrichtung für die Durchführung des Verfahrens zur Notbremsung eines Fahrzeuges (1) nach einem der Ansprüche 1 bis 11.

13. Vorrichtung nach Anspruch 12, **dadurch gekennzeichnet, daß** die Vorrichtung ein unabhängig von der Bedienung durch den Fahrer ansteuerbares Bremssystem aufweist.

14. Vorrichtung nach Anspruch 13, **dadurch gekennzeichnet, daß** das Bremssystem eine geringe Ansprechverzögerung aufweist

15. Vorrichtung nach einem der Ansprüche 12 bis 14, **dadurch gekennzeichnet, daß** die Vorrichtung mit einem Antiblockiersystem und/oder einer elektronischen Blockierverhinderung und/oder einer Fahrdynamikregelung kombiniert ist.

16. Vorrichtung nach einem der Ansprüche 12 bis 15, **dadurch gekennzeichnet, daß** die Vorrichtung für die Erfassung des Bewegungszustandes des Fahrzeuges Sensoren (18) für die Erfassung von Lenkwinkel, Fahrzeuggeschwindigkeit und/oder Fahrzeuggierwinkel aufweist.

17. Vorrichtung nach einem der Ansprüche 12 bis 16, **dadurch gekennzeichnet, daß** die Vorrichtung Sensoren (18) und Auswerteeinrichtungen zur Bestimmung des Kraftbeiwertes zwischen Straße und Reifen aufweist

18. Vorrichtung nach einem der Ansprüche 12 bis 17, **dadurch gekennzeichnet, daß** die Sensoren der Erfassungseinrichtung (12) für die Umgebung vorzugsweise Radar- oder Lasersensoren sind.

19. Vorrichtung nach einem der Ansprüche 12 bis 18, **dadurch gekennzeichnet, daß** die von der Erfassungseinrichtung (12) bereitgestellten Umgebungsdaten (17) und/oder von im Fahrzeug befindlichen Sensoren (18) gelieferten Sensorsignale (19) in einer Speichereinrichtung (30) abspeicherbar sind.

20. Vorrichtung nach einem der Ansprüche 12 bis 19, **dadurch gekennzeichnet, daß** die Vorrichtung eine Kameraeinrichtung aufweist, deren Bildsignal (31) in der Speichereinrichtung (30) abspeicherbar ist.

21. Vorrichtung nach einem der Ansprüche 19 oder 20, **dadurch gekennzeichnet, daß** die Speichereinrichtung (30) ein Ringspeicher ist.

22. Vorrichtung nach einem der Ansprüche 19 bis 21, **dadurch gekennzeichnet, daß** in der Speichereinrichtung (30) ein Zeit-Code für die von der Erfassungseinrichtung (12) bereitgestellten Umgebungsdaten (17) und/oder für die Sensorsignale (19) der Sensoren (18) und/oder für das Bildsignal (31) der Kameraeinrichtung gespeichert ist

23. Vorrichtung nach einem der Ansprüche 12 bis 22, **dadurch gekennzeichnet, daß** die Vorrichtung eine Synchronisationseinheit zur Synchronisation der Umgebungsdaten (17) der Erfassungseinrichtung (12) und/oder der Sensorsignale (19) der Sensoren (18) und/oder des Bildsignals (31) der Kameraeinrichtung aufweist.

## Claims

1. Method for the emergency braking of a vehicle, in which a sensing system (12) which is provided on the vehicle continuously senses obstacles (2, 3) which are located in or near to the direction (16) of movement of the vehicle (1) and signals them to an evaluation unit (20), sensors (18) which are arranged on the vehicle (1) or some of its assemblies continuously signal characteristic measurement variables (19) of the state of the vehicle to the evaluation unit (20), and the evaluation unit (20) continuously determines the set point values for influencing the movement of the vehicle from the signalled data (17) relating to the obstacles (2, 3) and from the measurement variables (19) of the state of the vehicle, wherein automatic emergency braking is triggered by rapid deceleration of the vehicle (1) only if there is a collision between the vehicle (1) and an obstacle (2, 3) which has been detected by the evaluation unit (29) and can no longer be avoided in terms of the physical principles of driving by influencing the vehicle by steering and/or braking, and wherein the limit in terms of the physical principles of driving for a possible avoidance manoeuvre before the obstacle (2, 3) and therefore the triggering of the emergency braking function for braking and/or steering movements which can be performed by the driver is.determined,
**characterized in that** when the obstacle (2, 3) is driven around by steering movements the time starting from which a collision can no longer be avoided in terms of the physical principles of driving occurs if, during the measured state of movement of the vehicle (1), the necessary avoidance manoeuvre radius (14) for avoiding the obstacle (2, 3) is smaller than an avoidance manoeuvre radius which is calculated from the state of movement of the vehicle (1).

2. Method according to Claim 1, **characterized in that** the avoidance manoeuvre radius (14) is calculated in any driving situation by means of the Kamm's circle.

3. Method for the emergency braking of a vehicle, in which a sensing system (12) which is provided on the vehicle continuously senses obstacles (2, 3) which are located in or near to the direction (16) of movement of the vehicle (1) and signals them to an evaluation unit (20), sensors (18) which are arranged on the vehicle (1) or some of its assemblies continuously signal measurement variables (19) of the state of the vehicle to the evaluation unit (20), and the evaluation unit (20) continuously determines the set point values for influencing the movement of the vehicle from the signalled data (17) relating to the obstacles (2, 3) and from the measurement variables (19) of the state of the vehicle, wherein automatic emergency braking is triggered by rapid deceleration of the vehicle (1) only if there is a collision between the vehicle (1) and an obstacle (2, 3) which has been detected by the evaluation unit (29) and can no longer be avoided in terms of the physical principles of driving by influencing the vehicle by steering and/or braking,
**characterized in that**
the ambient data (17) which are made available by a sensing apparatus (12) and/or the sensor signals (19) generated by sensors (18) arranged within the vehicle and/or an image signal (31) generated by a camera apparatus for visually sensing the traffic events are stored in a memory apparatus (30),
wherein
a time code is stored in the memory apparatus (30) for the ambient data (17) made available by the sensing apparatus (12) and/or the sensor signals (19) supplied by the sensors (18) and/or the image signal (31) supplied by the camera apparatus, wherein
only the data (18, 19, 31) which occur in a specific time period before the triggering of the automatic emergency braking function are stored in the memory apparatus (30).

4. Method for the emergency braking of a vehicle, in which a sensing system (12) which is provided on the vehicle continuously senses obstacles (2, 3) which are located in or near to the direction (16) of movement of the vehicle (1) and signals them to an evaluation unit (20), sensors (18) which are arranged on the vehicle (1) or some of its assemblies continuously signal measurement variables (19) of the state of the vehicle to the evaluation unit (20), and the evaluation unit (20) continuously determines the set point values for influencing the movement of the vehicle from the signalled data (17) relating to the obstacles (2, 3) and from the measurement variables (19) of the state of the vehicle, wherein automatic emergency braking is triggered by rapid deceleration of the vehicle (1) only if there is a collision between the vehicle (1) and an obstacle (2, 3) which has been detected by the evaluation unit (29) and can no longer be avoided in terms of the physical principles of driving by influencing the vehicle by steering and/or braking,
**characterized in that**
the ambient data (17) which is made available by a sensing apparatus (12) and/or the sensor signals (19) generated by sensors (18) arranged within the vehicle and/or an image signal (31) generated by a camera apparatus for visually sensing the traffic events are stored in a memory apparatus (30),
wherein
a time code is stored in the memory apparatus (30) for the ambient data (17) made available by the sensing apparatus (12) and/or the sensor signals (19) supplied by the sensors (18) and/or the image signal (31) supplied by the camera apparatus, wherein the ambient data (17) which are made available by the sensing apparatus (12) and/or the sensor signals (19) of the sensors (18) and/or the image signal (31) of the camera apparatus are synchronized, and the time code is used to synchronize the data (18, 19, 31).

5. Method according to one of Claims 1 to 4, **characterized in that**, in order to avoid a collision with the obstacle (2, 3) by braking, the time from which a collision can no longer be avoided in terms of the physical principles of driving occurs when the necessary stopping distance (15) is greater than the distance between the vehicle (1) and the obstacle (2, 3) essentially in the direction (16) of movement.

6. Method according to one of the preceding claims, **characterized in that** the calculation of the state of the vehicle on the basis of the measurement variables (19) of the sensors (18) which are arranged on the vehicle also includes the continuously determined force coefficient or the transmission of force between the tyre of the vehicle (1) and the underlying surface (10).

7. Method according to one of the preceding claims, **characterized in that** the vehicle (1) is decelerated by braking.

8. Method according to Claim 7, **characterized in that** the braking is carried out with the maximum brake pressure.

9. Method according to one of Claims 7 or 8, **characterized in that** the deceleration occurs up to the stationary state of the vehicle (1).

10. Method according to one of the preceding claims, **characterized in that** the deceleration after the emergency braking function responds occurs independently of actions by the driver through steering movements and/or braking.

11. Method according to one of the preceding claims, **characterized in that** after a critical obstacle (2, 3) has been detected and before the emergency braking function is triggered, the sensing system (12) essentially senses the collision obstacle (2, 3).

12. Device for carrying out the method for the emergency braking of a vehicle (1) according to one of Claims 1 to 11.

13. Device according to Claim 12, **characterized in that** the device has a brake system which can be actuated independently of the control operation by the driver.

14. Device according to Claim 13, **characterized in that** the brake system has a low response threshold.

15. Device according to one of Claims 12 to 14, **characterized in that** the device is combined with an anti-lock brake system and/or an electronic anti-lock system and/or a vehicle dynamics controller.

16. Device according to one of Claims 12 to 15, **characterized in that** the device for sensing the state of movement of the vehicle has sensors (18) for sensing the steering angle, velocity of the vehicle and/or yaw angle of the vehicle.

17. Device according to one of Claims 12 to 16, **characterized in that** the device has sensors (18) and evaluation devices for determining the force coefficient between the road and the tyre.

18. Device according to one of Claims 12 to 17, **characterized in that** the sensors of the sensing apparatus (12) for the surroundings are preferably radar sensors or laser sensors.

19. Device according to one of Claims 12, to 18, **characterized in that** the ambient data (17) which are made available via the sensing apparatus (12) and/or sensor signals (19) which are supplied by sensors (18) located in the vehicle can be stored in a memory apparatus (30).

20. Device according to one of Claims 12 to 19, **characterized in that** the device has a camera apparatus whose image signal (31) can be stored in the memory apparatus (30).

21. Device according to either of Claims 19 and 20, **characterized in that** the memory apparatus (30) is a ring buffer.

22. Device according to one of Claims 19 to 21, **characterized in that** a time code for the ambient data (17) which are made available by the sensing apparatus (12) and/or for the sensor signals (19) of the sensors (18) and/or for the image signal (31) of the camera apparatus is stored in the memory apparatus (30).

23. Device according to one of Claims 12 to 22, **characterized in that** the device has a synchronization unit for synchronizing, the ambient data (17) of the sensing apparatus (12) and/or the sensor signals (19) of the sensors (18), and/or the image signal (31) of the camera apparatus.

## Revendications

1. Procédé de freinage d'urgence d'un véhicule, dans lequel un système de détection (12) prévu sur le véhicule détecte en permanence des obstacles (2, 3) situés dans la direction de déplacement (16) du véhicule (1) ou à proximité de celle-ci et les transmet à une unité d'évaluation (20),
des détecteurs (18) disposés sur le véhicule (1) ou sur certains de ses modules transmettent en permanence des grandeurs caractéristiques de mesure (19) de la situation du véhicule à l'unité d'évaluation (20),
à partir des données (17) concernant les obstacles (2, 3) et des grandeurs de mesure (19) de l'état du véhicule qui lui sont transmises, l'unité d'évaluation (20) détermine en permanence des valeurs de consigne d'action sur le déplacement du véhicule,
un freinage automatique d'urgence par ralentissement rapide du véhicule (1) n'étant déclenché que si l'unité d'évaluation (29) a constaté qu'une collision du véhicule (1) avec un obstacle (2, 3) ne peut plus être empêchée par une action physique sur le déplacement du véhicule par action sur le volant et/ou freinage et
la limite physique de conduite de l'évitement possible de l'obstacle (2, 3) et donc le déclenchement de la fonction de freinage d'urgence étant définis pour les déplacements de freinage et/ou d'action sur le volant que le conducteur peut entreprendre, **caractérisé en ce que**
lors de l'évitement de l'obstacle (2, 3) par des changements de direction, l'instant à partir duquel une collision ne peut plus être évitée par action physique sur la conduite est celui pour lequel, compte tenu des conditions mesurées de déplacement du véhicule (1), le rayon (14) nécessaire pour éviter l'obstacle (2, 3) est plus petit qu'un rayon d'évitement calculé à partir des conditions de déplacement du véhicule (1).

2. Procédé selon la revendication 1, **caractérisé en ce que** le calcul de rayon d'évitement (14) s'effectue dans chaque situation de conduite à l'aide du cercle de Kamm.

3. Procédé de freinage d'urgence d'un véhicule, dans lequel un système de détection (12) prévu sur le véhicule détecte en permanence des obstacles (2, 3) situés dans la direction de déplacement (16) du véhicule (1) ou à proximité de celle-ci et les transmet à une unité d'évaluation (20),
des détecteurs (18) disposés sur le véhicule (1) ou sur certains de ses modules transmettent en permanence des grandeurs caractéristiques de mesure (19) de la situation du véhicule à l'unité d'évaluation (20),
à partir des données (17) concernant les obstacles (2, 3) et des grandeurs de mesure (19) de l'état du véhicule qui lui sont transmises, l'unité d'évaluation (20) détermine en permanence des valeurs de consigne d'action sur le déplacement du véhicule,
un freinage automatique d'urgence par ralentissement rapide du véhicule (1) n'étant déclenché que si l'unité d'évaluation (29) a constaté qu'une collision du véhicule (1) avec un obstacle (2, 3) ne peut plus être empêchée par une action physique sur le déplacement du véhicule par déplacement du volant et/ou freinage,
**caractérisé en ce que**
les données d'environnement (17) délivrées par un dispositif de détection (12) et/ou les signaux (19) délivrés par des détecteurs (18) disposés à l'intérieur du véhicule et/ou un signal d'image (31) formé par un dispositif à caméra qui détecte visuellement l'état du trafic sont conservées dans un dispositif de mémoire. (30),
**en ce qu'**un code de temps concernant les données d'environnement (17) délivrées par le dispositif de détection (12) et/ou les signaux (19) délivrés par les détecteurs (18) et/ou le signal d'image (31) délivré par le dispositif à caméra est conservé dans le dispositif de mémoire (30) et
**en ce que** seules les données (18, 19, 31) qui ont été produites pendant un intervalle de temps donné avant le déclenchement de la fonction de freinage automatique d'urgence sont conservées dans le dispositif de mémoire (30).

4. Procédé de freinage d'urgence d'un véhicule, dans lequel un système de détection (12) prévu sur le véhicule détecte en permanence des obstacles (2, 3) situés dans la direction de déplacement (16) du véhicule (1) ou à proximité de celle-ci et les transmet à une unité d'évaluation (20),
des détecteurs (18) disposés sur le véhicule (1) ou sur certains de ses modules transmettent en permanence des grandeurs caractéristiques de mesure .(19) de la situation du véhicule à l'unité d'évaluation (20),
à partir des données (17) concernant les obstacles (2, 3) et des grandeurs de mesure (19) de l'état du véhicule qui lui sont transmises, l'unité d'évaluation (20) détermine en permanence des valeurs de consigne d'action sur le déplacement du véhicule,
un freinage automatique d'urgence par ralentissement rapide du véhicule (1) n'étant déclenché que si l'unité d'évaluation (29) a constaté qu'une collision du véhicule (1) avec un obstacle (2, 3) ne peut plus être empêchée par une action physique sur le déplacement du véhicule par déplacement du volant et/ou freinage,
**caractérisé en ce que**
les données d'environnement (17) délivrées par un dispositif de détection (12) et/ou les signaux (19) délivrés par des détecteurs (18) disposés à l'intérieur du véhicule et/ou un signal d'image (31) formé par un dispositif à caméra qui détecte visuellement l'état du trafic sont conservées dans un dispositif de mémoire (30),
**en ce qu'**un code de temps concernant les données d'environnement (17) délivrées par le dispositif de détection (12) et/ou les signaux (19) délivrés par les détecteurs (18) et/ou le signal d'image (31) délivré par le dispositif à caméra est conservé dans le dispositif de mémoire (30) et
**en ce que** les données d'environnement (17) délivrées par le dispositif de détection (12) et/ou les signaux (19) des détecteurs (18) et/ou le signal d'image (31) du dispositif à caméra sont synchronisées, le code de temps étant utilisé pour la synchronisation des données (18, 19, 31).

5. Procédé selon l'une des revendications 1 à 4, **caractérisé en ce que** pour éviter une collision avec l'obstacle (2, 3) par freinage, l'instant à partir duquel une collision ne peut plus être évitée par une action physique sur la conduite est celui auquel le parcours (15) nécessaire pour l'évitement est plus long que la distance entre le véhicule (1) et l'obstacle (2, 3) essentiellement dans la direction de déplacement (16).

6. Procédé selon l'une des revendications précédentes, **caractérisé en ce que** la valeur de correction de force et la valeur du transfert de force entre les bandages de roue du véhicule (1) et la chaussée (10), déterminées en permanence, sont également utilisées dans le calcul de la situation du véhicule à partir des grandeurs de mesure (19) de détecteurs (18) disposés sur le véhicule.

7. Procédé selon l'une des revendications précédentes, **caractérisé en ce que** le ralentissement du véhicule (1) s'effectue par freinage.

8. Procédé selon la revendication 7, **caractérisé en ce que** le freinage s'effectue à la pression maximale de freinage.

9. Procédé selon l'une des revendications 7 ou 8, **caractérisé en ce que** le ralentissement a lieu jusqu'à l'arrêt du véhicule (1).

10. Procédé selon l'une des revendications précédentes, **caractérisé en ce que** le ralentissement s'effectue après l'activation de la fonction de freinage d'urgence, indépendamment des manipulations du conducteur par action sur le volant, et/ou par freinage.

11. Procédé selon l'une des revendications précédentes, **caractérisé en ce qu'**après la détection d'un obstacle critique (2, 3) et avant le déclenchement de la fonction de freinage d'urgence, le système de détection (12) détecte essentiellement l'obstacle de collision (2, 3).

12. Dispositif en vue de la mise en oeuvre du procédé de freinage d'urgence d'un véhicule (1) selon l'une des revendications 1 à 11.

13. Dispositif selon la revendication 12, **caractérisé en ce que** le dispositif présente un système de freinage qui peut être commandé indépendamment d'une commande par le conducteur.

14. Dispositif selon la revendication 13, **caractérisé en ce que** le système de freinage présente un faible retard de réaction.

15. Dispositif selon l'une des revendications 12 à 14, **caractérisé en ce que** le dispositif est combiné à un système anti-blocage et/ou un système électronique anti-blocage et/ou une régulation dynamique de la conduite.

16. Dispositif selon l'une des revendications 12 à 15, **caractérisé en ce que** pour détecter la situation de déplacement du véhicule, le dispositif présente des détecteurs (18) qui détectent l'angle de direction, la vitesse du véhicule et/ou l'angle de lacet du véhicule.

17. Dispositif selon l'une des revendications 12 à 16, **caractérisé en ce que** le dispositif présente des détecteurs (18) et des dispositifs d'évaluation qui déterminent la valeur de correction de la force entre la chaussée et les bandages de roue.

18. Dispositif selon l'une des revendications 12 à 17, **caractérisé en ce que** les détecteurs du dispositif de détection (12) sont des détecteurs d'environnement, de préférence à radar ou à laser.

19. Dispositif selon l'une des revendications 12 à 18, **caractérisé en ce que** les données d'environnement (17) délivrées par le dispositif de détection (12) et/ou les signaux (19) délivrés par les détecteurs (18) situés dans le véhicule peuvent être conservées dans un dispositif de mémoire (30).

20. Dispositif selon l'une des revendications 12 à 19, **caractérisé en ce que** le dispositif présente un dispositif à caméra dont le signal d'image (31) peut être conservé dans le dispositif de mémoire (30).

21. Dispositif selon l'une des revendications 19 ou 20, **caractérisé en ce que** le dispositif de mémoire (30), est une mémoire en anneau.

22. Dispositif selon l'une des revendications 19 à 21, **caractérisé en ce qu'**un code de temps pour les données (17) délivrées par le dispositif de détection (12) et/ou pour les signaux (19) des détecteurs (18) et/ou pour le signal d'image (31) du dispositif à caméra est conservé dans le dispositif de mémoire (30).

23. Dispositif selon l'une des revendications 12 à 22, **caractérisé en ce que** le dispositif présente une unité de synchronisation qui assure la synchronisation des données d'environnement (17) du dispositif de détection (12) et/ou des signaux (19) des détecteurs (18) et/ou du signal d'image (31) du dispositif à caméra.
